Europäisches Patentamt

European Patent Office

Office européen des brevets

(19)

(11) Publication number: **0 112 554**
A2

(12) **EUROPEAN PATENT APPLICATION**

(21) Application number: **83112915.0**

(22) Date of filing: **21.12.83**

(51) Int. Cl.³: **G 06 K 11/00,** G 06 F 3/037

(30) Priority: **21.12.82 US 452024**

(43) Date of publication of application: **04.07.84**
**Bulletin 84/27**

(84) Designated Contracting States: **DE FR GB**

(71) Applicant: **Interaction Systems, Inc., 24 Munroe Street,**
**Newtonville Massachusetts 02160 (US)**

(72) Inventor: **Ng, Henry H., 576 Newton Street, Chestnut Hill**
**Massachusetts 02147 (US)**
Inventor: **Hatvany, Bela R., 57 Nassington Road, London**
**NW3 (GB)**

(74) Representative: **Blumbach Weser Bergen Kramer**
**Zwirner Hoffmann Patentanwälte, Radeckestrasse 43,**
**D-8000 München 60 (DE)**

(54) **Method and apparatus for electronic touch mapping.**

(57) A method and apparatus for the unpatterned and continuous electronic mapping of a touch (34) to an input panel (12) produces a set of measurements that locates the touch relative to a coordinate system. Sensing the mapped touch can provide menu selection and other data processing commands. Mapping a moving touch can provide varied functions including signature detection. Displaying the mapped touch location can provide graphics creation and other touch-responsive displays.

**BLUMBACH · WESER · BERGEN · KRAMER**
**ZWIRNER · HOFFMANN**

EUROPEAN PATENT ATTORNEYS

IN MÜNCHEN
R. KRAMER DIPL.-ING. PATENTANWALT
W. WESER DIPL.-PHYS. DR. RER. NAT. PATENTANWALT
E. HOFFMANN DIPL.-ING. PATENTANWALT

IN WIESBADEN
P. G. BLUMBACH DIPL.-ING. PATENTANWALT
P. BERGEN PROFESSOR DR. JUR. DIPL.-ING.
G. ZWIRNER DIPL.-ING. DIPL.-W.-ING. PATENTANWALT

Interaction Systems, Inc.                    10.174 EPC
Newtonville, Massachusetts,
U.S.A.

## METHOD AND APPARATUS FOR ELECTRONIC TOUCH MAPPING

BACKGROUND

This invention relates to the electronic mapping of a human touch to an input panel. The invention provides a method and apparatus for the instant mapping, without electrical contact, of a touch on an unpatterned and continuous basis. One application of the invention is in a cathode ray tube touch terminal, with which a human operator enters information to a data processing system according to the location of the operator's touch to the terminal display screen.

One type of prior touch terminals locates a touch at only a limited number of fixed, discrete display screen positions. Some prior terminals of this nature locate a touch electronically. Other terminals of this type employ a grid of mechanical switches that responds to the pressure of a touch.

Radeckestraße 43  8000 München 60  Telefon (089) 883603/883604  Telex 5212313  Telegramme Patentconsult
Sonnenberger Straße 43  6200 Wiesbaden  Telefon (06121) 562943/561998  Telex 4186237  Telegramme Patentconsult
Telefax (CCITT 2) Wiesbaden und München (089) 8344618 Attention Patentconsult

Another type of prior touch terminals locates a touch at essentially any location by locating the point at which the touch effects electrical contact between two closely spaced continuous conductors.

It is also known to map an operator's hand movement on an input panel by providing a carriage which the operator moves on the panel surface. This device provides instant and continuous unpatterned touch mapping, but it requires the carriage, and does not respond to the direct touch of the operator.

It accordingly is an object of this invention to provide an improved method and apparatus for the unpatterned and continuous mapping of human touch to an input screen or panel. The invention may in principle be practiced with an animal other than a human but for clarity and without limitation is described with reference to a human touch. The improved electronic touch mapping which this invention provides responds directly to a human touch and avoids shortcomings of prior techniques including those attendant with time constant measurements, with electrical contacts, with mechanical pressure switch grids, and with discrete patterned electronic touch detectors.

A further object of the invention is to provide a method and apparatus for the continuous

3

unpatterned electronic mapping of human touch which is relatively easy to implement on a commercial basis and which operates with high accuracy and high reliability. A corresponding object is that the invention be relatively simple to implement and relatively low in cost and thereby be suited for varied touch mapping devices.

Other objects of the invention will in part be obvious and will in part appear hereinafter.

SUMMARY OF THE INVENTION

A touch mapping device according to the invention has an input panel with an exposed resistive coating. Contacts adjacent edges of the coating connect to an electrical source to apply a known voltage to the coating. Measurements of the source currents which a capacitive touch draws at different contacts provide a measure of the location of the touch relative to the several contacts. The measurements are of the magnitude of the source current. The measurements thus locate the touch according to the coordinate system which the contacts are arranged to define.

A preferred practice of the invention measures the source currents which a capacitive contact to the resistive coating draws at several contacts. A comparison of plural measures obtained at contacts which are spaced apart along one coordinate axis locates the touch along that axis. The comparison can be a ratio function of the plural measures. Where the applied source voltage is alternating, as preferred, it is advantageous to employ a transformer to sample the source current for the touch-mapping measurement.

4

The resultant measurement maps the location of the touch on an unpatterned basis, in that it is not confined to predetermined patterns of locations such as occurs in the prior art by using a grid of pressure contacts or an array of discrete conductive pads, instead of a continuous resistive coating as the present invention employs. Further, the invention operates without a direct-current electrical connection, as occurs in one prior art practice with a continuous resistive film. Moreover, the measurement is continuous in that the determined touch location accurately corresponds to the actual touch position anywhere on the input region of the resistive coating, and can continuously follow a moving touch.

The output device that receives and processes the resultant touch location can employ, by way of non-limiting illustration, a cathode ray tube display, a display of alphanumeric characters, a hard copy recorder, or a machine readable memory device.

A touch mapping device according to the invention can enter, by a user's touch on the input panel, a menu-type selection and other commands to a data processing system. Alternatively, the continuous unpatterned mapping of a moving touch, as the invention further provides, can provide varied operations including signature verification as required for security purposes. In this illustrative application, the operator writes a signature on the input panel and the mapping device in essence records the signature instantaneously and presents it to a data base for verification comparison purposes. In addition, the display of the mapped touch location can, for example, provide a touch-responsive graphics display, as used in computer aided design systems and in other interactive display systems.

The mapping of a human touch which the invention provides by sensing the capacitive current drawn by an electrically-resistant touch panel is characterized by simplicity in practice, accuracy, and reliability. These and other features of the invention accordingly bring the advantages of unpatterned continuous touch detection and mapping to widespread commercial use.

A feature of the touch mapping device of this invention accordingly is that it has a touch receptive input element with an electrically-conductive resistive coating that is substantially continuous along at least a first coordinate axis. The coating is exposed for receiving a capacitive touch, either directly or indirectly as through a protective non-conductive covering. At least a first electrical contact is in circuit with the resistive coating at a selected location along the first coordinate axis, and an electrical source is provided for applying an electrical measuring signal to that contact. The device further features a measuring element which is responsive to the magnitude of the measuring signal current which a capacitive touch to the resistive coating draws. The measuring element maps the relative location of such a touch along the first coordinate axis. Another feature of the device is that the measuring element measures the measuring signal current which the resistive coating draws at the connection of the first contact with the source element. Note also that the invention requires only a single conductive coating or layer.

A preferred practice of the invention in addition features a second electrical contact in circuit with the conductive resistive coating at a selected location spaced from the first contact along the first axis. In this practice, the source element applies a measuring signal to each contact to the resistive coating. The different measuring signals have known relative magnitude parameters. In such a device, the measuring element responds to the magnitude of the source currents which a capacitive touch to the resistive coating draws in response to the signals applied to each contact, and maps the location of that touch along the first axis relative to both contacts.

A further feature of the touch mapping device is that the measuring element determines a ratio function of the measuring signal current magnitudes. The measuring element thereby maps the location of a touch in response to a determination of relative coating impedance from the touch to each of the two electrical contacts. It is also a feature that the source element applies an alternating measuring voltage successively to the first contact and to the second contact. Moreover, the alternating source voltage preferably is applied across the two contacts successively with different, i.e. opposite, relative phases.

The invention accordingly comprises the several steps and the relation of one or more of such steps with respect to each of the others, and the apparatus embodying features of construction, combinations of elements and arrangements of parts adapted to effect such steps, all as exemplified in the following detailed disclosure, and the scope of the invention is indicated in the claims.

7

BRIEF DESCRIPTION OF DRAWINGS

For a fuller understanding of the nature and objects of the invention, reference should be made to the following detailed description and the accompanying drawing, in which:

FIGURE 1 is a block schematic representation of a touch mapping system according to the invention;

FIGURE 2 is a block schematic representation of a touch mapping system as shown in FIGURE 1 and employing an alternating measuring source;

FIGURE 3 shows a further touch mapping system according to the invention;

FIGURE 4 is a block schematic representation of another implementation according to the invention;

FIGURE 5 shows a further pattern of electrical connections to a touch panel according to the invention; and

FIGURE 6 illustrates a semi-continuous coating for the practice of the invention.

DESCRIPTION OF ILLUSTRATED EMBODIMENTS

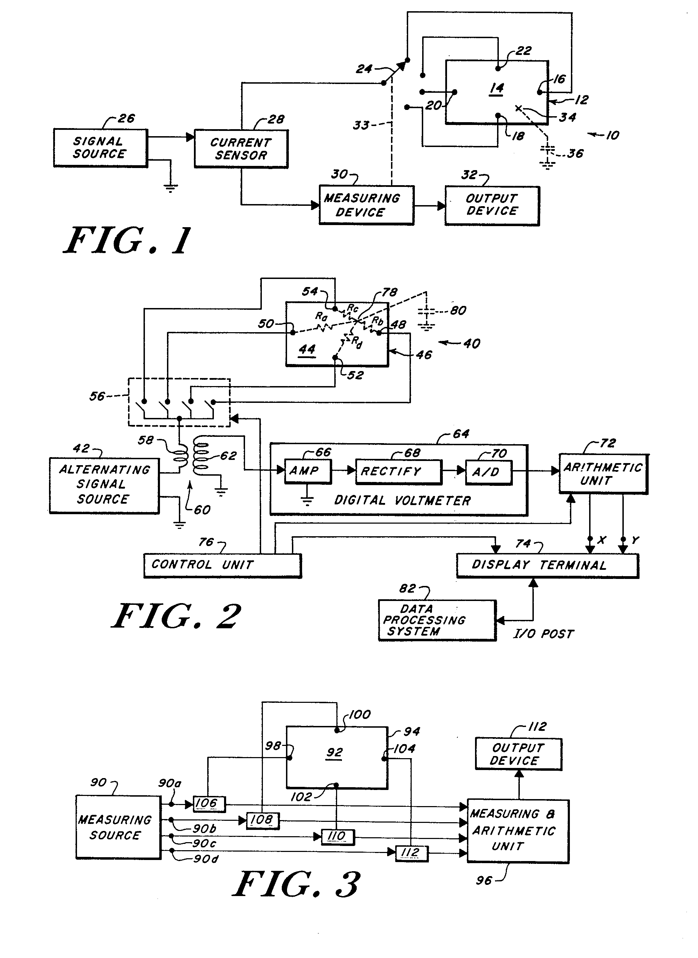

FIGURE 1 shows a two-coordinate touch mapping system 10 according to the invention in which a rectangular touch panel 12 has a resistive coating 14 exposed for touch anywhere on the panel. Four electrodes 16, 18, 20 and 22 provide contacts to different edge locations of the coating 14 and connect to different poles of a single-pole, four-position switch 24. A signal source 26 is connected with the switch 24 to apply a measuring voltage to any electrode, and hence to any edge location of the coating 14.

A current sensor 28 is connected to apply to a measuring device 30 a signal responsive to the magnitude of the current which the source supplies to the coating 14. An output device 32 receives from the measuring device signals which identify the location of a touch according to the coordinate system which the electrodes define.

This system maps a touch on the panel 12, as illustrated by the cross 34, by measuring the relative magnitudes of the electrical currents which the resistive coating 14 draws from the source 26 at the several electrodes 16, 18, 20 and 22. More particularly, the human touch 34 to the panel 12 in effect applies an electrical capacitance 36 between the resistive coating at the touch location and ground. The measuring device 30, in conjunction with the switch 24 to which it is coupled, as designated by the broken line interconnection 33 between these elements, develops a measure of the source current at each of the horizontally-opposed electrodes 20 and 16 to locate the touch along the horizontal axis. The measuring device similarly develops a measure of the source current drawn at each of the vertically-opposed electrodes 18 and 22 to locate the touch along the vertical axis. The intersection of these two location measures thus completely locates the point of contact of the touch to the panel 12.

FIGURE 2 shows with further detail a mapping device 40 of the type illustrated in FIGURE 1. The mapping system 40 employs an alternating signal source 42, preferably of known sinusoidal voltage. The source 42 applies the alternating measuring signal to the resistive coating 44 of a touch panel 46 at either of two horizontally-spaced electrodes 48 and 50 and at either of two vertically-spaced electrodes 52 and 54, by means of a remotely-controllable four-pole, single-throw switch 56. The primary winding 58 of a current sensing step-up transformer 60 is in series between the source 42 and the switch 56. The transformer secondary winding 62 is connected to the input of a digital voltmeter 64, which provides the function of the measuring device 30 of the FIGURE 1 system. The illustrated digital voltmeter employs an input amplifier stage 66, a rectifier stage 68, and an analog-to-digital converter 70. The digital output measurement from the voltmeter 64 is applied to an arithmetic device 72 that determines the (x) and the (y) coordinates of a touch to the touch panel. A two-coordinate display terminal 74, typically including a cathode ray tube display and connected to an input/output port of a data processing system 82, receives the coordinate signals, and processes them according to the function of the system 40. A control unit 76, typically employing a programmed microprocessor, controls the switch 56, the arithmetic device 72, and the display terminal 74. The control unit can also be arranged for controlling the operation of the digital voltmeter 64. More particularly, the control unit operates the switch to apply the alternating measuring current to different electrodes of the touch panel 46, and provides command signals which cause the arithmetic device 72 and the display terminal 74 to process the signals from the voltmeter 64 according to the electrode connections of the switch.

The illustrated measuring system 40 locates a human touch 78 to the resistive touch-panel coating 44 in the same manner as described above with reference to the system of FIGURE 1 and as now described in further detail. Assume that the net effective electrical impedance of the panel coating 44 from the electrode 50 to the touch 78 has a value designated as $R_A$ and that the corresponding impedance of the coating from the opposite electrode 48 to the touch 78 has the value $R_B$. Similarly, the coating impedance from each vertically-spaced electrode 54 and 52 to the touch 78 is designated, respectively, $R_C$ and $R_D$. In a typical operating sequence, the control unit operates the switch 56 to apply the alternating measuring signal from the source 42 to electrode 50. Under this condition, the digital voltmeter 64 receives from the transformer 60 an input signal corresponding to the capacitive current which the resistive coating draws from the source at this electrode and which accordingly is a function of the impedance value $R_A$. (The sensed source current is also responsive to other parameters, including the capacitive impedance to ground which the touch presents to the input panel. These other parameters are understood to effect essentially equally the current measurements of all the electrodes and hence cancel out and can be neglected in the measurement processing.) The control unit also provides a command signal to the arithmetic unit which identifies the resultant digital signal correspondingly.

The arithmetic unit 72, under command of the control unit 76, stores the resultant digital signal with an identification that it corresponds to the measurement involving the impedance value $R_A$. The control unit advances to another measuring sequence in which the switch 56 is set to apply the alternating measuring signal to only the electrode 48. The current-responsive signal input to the voltmeter 64 accordingly is responsive to, among other parameters, the impedance $R_B$. In two further measuring sequences, the control unit applies current exclusively to the electrode 54 and then to the opposite electrode 52, to measure signals responsive to the impedances $R_C$ and $R_D$, respectively.

The control unit 76 operates the arithmetic unit 72 to compute the horizontal or X-axis coordinate of the touch 78 from these measurements of the impedance values $R_A$, $R_B$, $R_C$ and $R_D$. That is, the X coordinate is a function of these four impedance values. The resultant X coordinate signal from the arithmetic unit is applied to the X input of the display terminal 74. The control unit 76 also commands the operation of the arithmetic unit 72 to compute the Y-axis or vertical coordinate of the position on the input panel of the touch 78 from the four measured impedance values. This coordinate identifying signal from the arithmetic unit is applied to the vertical or Y-axis input of the display terminal.

Where each electrode 48, 50, 52 and 54 of FIGURE 2 is an elongated strip or bar, as appears for example in FIGURE 5 with the electrodes 162a, 162b, 164a and 164b, each measured impedance value $R_A$, $R_B$, $R_C$ and $R_D$ is, at least to a first approximation, directly proportional to the distance of the touch 78 from the corresponding electrode as measured along a coordinate axis. For example, the value $R_A$ corresponds

12

to the horizontal, X-axis, distance of the touch from the vertically-extending strip-like electrode 50. Consequently, the arithmetic unit 72 can determine the X-axis coordinate of the touch 78 simply as a ratio function of the two impedance values $R_A$ and $R_B$, i.e. as a function of $R_A/R_B$. The computation of the Y-axis coordinate simplifies in like manner, for this electrode configuration, to a function of $R_C/R_D$.

The illustrated mapping system 40 of FIGURE 2 typically repeats the foregoing sequence of four measurements, each with measuring current applied to a different one of the four electrodes 48, 50, 52 and 54, repeatedly and at high speed in a manner that effectively monitors continuously the position of the touch 78 to the touch panel. The system accordingly provides an output indication on the display terminal which continuously corresponds to the location of the touch 78 and accordingly maps it.

It will now be apparent that the system of FIGURE 2 can in fact have any of many configurations. In one example, the touch panel 46 includes the display of a menu of operator selectable items such as may be encountered in selecting a book at a library, and the display terminal 74 includes a CRT display which confirms to the library patron the choices made by touching the input terminal. The data processing system to which the display terminal 74 is connected further can include, in this instance, automated accessing equipment for locating and perhaps even producing a print or other copy or display of the selected book or other library item.

In this and other instances, the touch panel 46 can be an optically-transparent plate with a transparent resistive coating 44, and can be placed directly over and in selected registration with the CRT screen of the display terminal 74, as is conventional in currently-available CRT touch terminals. In another instance, the mapping system 40 disposes the touch panel 46 at a position convenient for the user to trace the user's signature. The display terminal 74 provides a visual display of the traced signature to a security guard as well as applying to a signature verification processor of the data processing system 82 the coordinate information of the signature. Still another application is in a computer aided design device where the user traces out--with the touch to the touch panel-- a electrical circuit layout or mechanical construction or other design, for example, and the display terminal both displays the traced pattern and commands corresponding automated equipment in the system 82 to implement the design or structure thus being created.

In these and other applications of the invention, the coated touch panel typically is rigid, hard and self-supporting. A touch to the panel is detected and located without in any way requiring that the touch deflect or otherwise elastically deform any structure. This nondeflecting operation facilitates high speed user operation and equipment response.

Implementation of the mapping system of FIGURE 2 locates a touch essentially instantaneously, and senses even small movements in the touch location. The system thus operates in real time and with high sensitivity.

FIGURE 3 shows a further embodiment of the invention in which an electrical measuring source 90 applies measuring signals to plural locations on a resistive coating 92 of an input panel 94, and a measuring and arithmetic unit 96 receives multiple current-responsive signals simultaneously. In particular, the touch panel 94 is again illustrated as having a continuous resistive coating 92 on an exposed touch-receiving rectangular surface and as having four electrical contacts 98, 100, 102 and 104 at the mid-points of the four edges of the panel coating. The illustrated source 90 has a separate output supply terminal 90a, 90b, 90c and 90d for supplying a measuring signal separately to each contact 98, 100, 102 and 104, respectively. The source is arranged to apply measuring signals to a set of one or more contacts simultaneously, with the measuring signal that it applies to each contact being isolated from that applied to another contact. A separate current sensor 106, 108 and 110 and 112 is connected in the electrical path between the source 90 and each contact 98, 100, 102 and 104, respectively. Each current sensor can employ a transformer as illustrated in FIGURE 2, or another known current-sampling technique.

The illustrated measuring and arithmetic unit 96 has a separate measuring-signal input terminal for each current sensor and hence can receive four measuring current signal simultaneously. The unit 96 determines the coordinates of a touch to the resistive coating 92 of the touch panel 94 in the same manner as described above with reference to FIGURES 1 and 2. An output device 112 responds to and processes the resultant touch location as previously described.

15

In one illustrative embodiment of the FIGURE 3 system, the source 90 applies measuring signals simultaneously to all four contacts. The measuring and arithmetic unit 96 hence receives four input signals concurrently, and provides a two-dimensional mapping of the touch on the input panel 94 in response. The source 90 can be arranged to produce the measuring signal at each output terminal with the identical in-phase voltage characteristic. Alternatively, the source can be arranged to apply to each contact 98, 100, 102 and 104 a measuring signal having a selectively different characteristic, such that the corresponding signal it produces at the input to the measuring and arithmetic unit 96 can be processed separately from the other signals which the unit 96 receives.

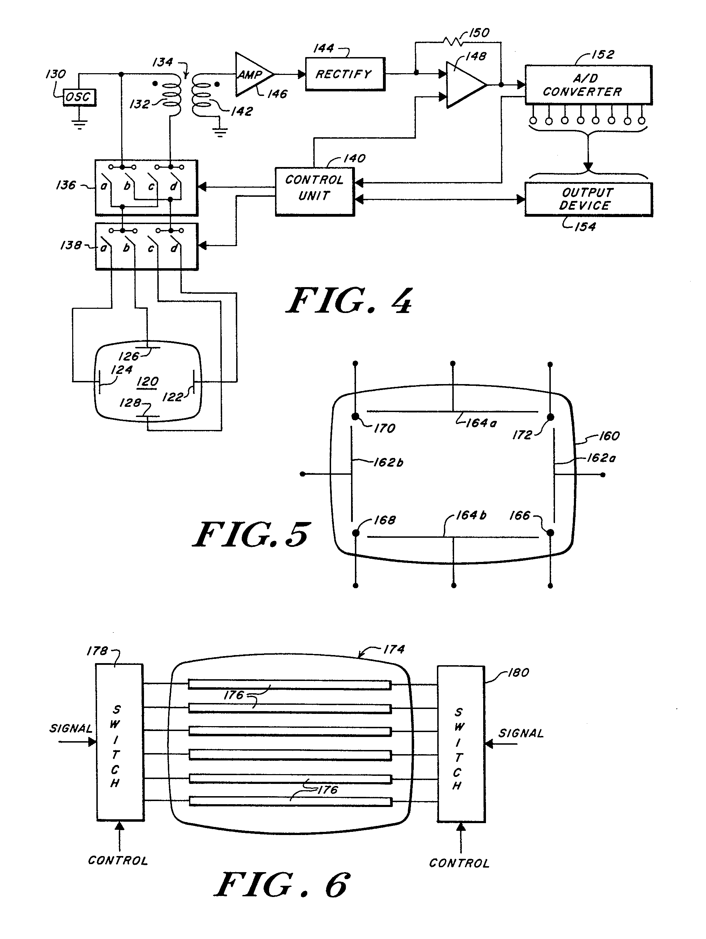

FIGURE 4 shows a touch-locating device for the practice of the invention with enhanced touch sensitivity. The device has a touch panel 120 with an electrically-conductive resistive coating to which four electrodes 122, 124, 126, and 128 provide electrical contact. The illustrated electrodes 122 and 124 are elongated and spaced apart along a horizontal axis and electrodes 126 and 128 are similarly elongated and spaced apart along a transverse, i.e. vertical, axis. An oscillator 130 applies an alternating electrical measuring signal to the primary winding 132 of a current sensing transformer 134. A pair of analog switches indicated generally at 136 and 138 applies the measuring signal voltage which the source 130 develops across the primary winding 132 to the resistive coating, preferably at any pair of opposed electrodes.

Each illustrated switch 136, 138 provides a four-pole, single-throw operation, and the switches are wired to apply the voltage across the transformer winding 132 between any pair of opposed electrodes, with either relative phase or polarity. For example, closing the contacts (a) and (d) of switch 136 and closing contacts (a) and (d) of switch 138 connects the transformer winding between the horizontally-opposed terminals 122 and 124, with the phase or polarity of the voltage at the electrode 124 being the same as that at the upper, dotted end of the transformer winding.

Changing the switches to close the (b) and (c) contacts of switch 136 and the (a) and (d) contacts of switch 138 again applies the transformer voltage between the same two electrodes 122 and 124, but with reverse polarity. In similar manner, the switches can apply the voltage across the transformer winding 132 to the vertically-spaced electrodes 126 and 128, with either polarity. The switches 136 and 138 preferably are electrically-driven integrated circuit semiconductor analog switches which a microprocessor control unit 140 operates. It also is preferred that the switches have low capacitance between closed contacts, and be arranged electrically in series as illustrated to reduce the effect of switch capacitances.

The device of FIGURE 4 detects the current which a capacitive touch to the coated touch panel 120 draws by rectifying the signal induced in the secondary winding 142 of transformer 134 with a rectifier 144, preferably after amplification with an amplifier 146. A differential amplifier 148 having a resistor 150 in the feedback path provides a null, near zero, output signal in response to the signal from the transformer 134 under a condition where there is no touch to the touch panel 120. For this purpose, the control unit 140 applies to the reference input of the differential amplifier a reference voltage having a value which nulls the rectifier 144 output voltage, and hence which produces a near zero differential-amplifier output under the no-touch condition. An analog-to-digital converter 152 produces a multi-digit binary output signal in response to the analog signal from the differential amplifier 148, and applies it to an output device 154.

The preferred operation of the device of FIGURE 4 applies the measuring signal from the source 130 to a pair of opposed electrodes, with one relative phase or polarity, for performing one measurement and then applies the same source signal to the same pair of electrodes with opposite phase or polarity for a second measurement. A ratio function of the two measurements, as described above, provides the desired precise location of a touch along the axis between the opposed electrodes. The source signal is applied to opposed contacts in order to provide a capacitive current that is comparatively large and relatively uniform for a touch anywhere along the spacing between those electrodes.

The device of FIGURE 4 provides significant sensitivity to the relatively small capacitance which a human touch typically presents to the coated touch panel 120. One instrument of this type operates with a source frequency in the order of 750 megahertz and locates with a human touch high resolution. The capacitance of a touch to the panel 120 typically is in the order of 50 to 200 pico farads.

FIGURE 5 illustrates that an instrument as described in any of FIGURES 1-4 can be used with a touch panel having electrodes arrayed along more than two axes. The relatively-coated touch panel 160 has a pair of electrodes 162a and 162b arrayed along a first axis and a second pair of electrodes 164a and 164b arrayed along a second axis, in the manner of FIGURES 1 through 4. The coated panel has further electrodes 166, 168, 170 and 172. The touch panel 160 can be connected in any one of the instruments of FIGURES 1 through 4 for locating a touch thereto with measurements made at the electrodes 162a, 162b, 164a and 164b. Further, in some instances, the accuracy and precision of the touch location can be increased by making further measurements with the measuring signal applied at the additional electrodes 166, 168, 170, 172.

More particularly, the illustrated electrodes of the pairs 162, 164 are elongated and bars located along each of the four sides of the rectangular panel 160. The further electrodes 166, 168, 170, 172 are illustrated as being essentially point contacts located adjacent the corners of the rectangular panel. This arrangement of the electrode pairs 162, 164 can locate a touch in the central region of the touch panel 160 with greater accuracy than a touch in the corner regions. However, additional measurements made with the electrodes 166-172, connected with a measuring source either singly as in FIGURE 1 or in opposite pairs as in FIGURE 4, can locate a touch in these corner portions of the panel with substantially the same high accuracy as the electrode pairs 162, 164 provide for the central region.

FIGURE 6 illustrates a touch panel 174 having a resistive coating thereon only in a pattern of discrete segments, illustrated as parallel bars 176. Each bar extends essentially fully across the touch panel 174 along the same axis, in the horizontal axis. The parallel bars can be optically transparent so that the touch panel can overlie a cathode ray tube display screen or like display. A switch 178 has multiple poles, each of which connects separately to the left end of each illustrated bar 176, and a like switch 180 has each pole thereof connected to the opposite right end of each conductive bar. With this arrangement, the switches 178, 180 can be operated to apply a measuring signal separately to each bar 176 for determining the location of a touch to the panel 174 along the vertical or height direction, which extends transversely to the parallel bars 176. The location of the touch in the other, e.g. horizontal direction, can be determined by applying measuring signal to the bars in parallel, so that in that direction they operate essentially as a continuous unpatterned coating as described above, particularly with reference to FIGURES 1 and 2.

The invention has been described with reference to embodiments providing a two-dimensional mapping of a touch but it will be appreciated that the invention can be applied to simply locating a touch along a single dimension. Further, the invention can be practiced with a variety of electrode configurations to the resistive coating of a touch panel. At least two electrodes are preferred for accurately and reliably locating a touch along one axis or dimension and at least three electrodes are preferred for a like two-dimensional location. Additional electrodes can be

20

used to provide additional mapping information. Further, the electrodes can be configured as point contacts to the resistive coating as illustrated, can be elongated line contacts as well as having other configurations which those skilled in the art will find suitable for different mapping devices. For each particular electrode and touch panel configuration used, the practice of the invention provides a unique set of coordinate-identifying measurements for a touch at any point on the touch panel. The arithmetic unit 72 of FIGURE 2, and the unit 96 of FIGURE 3, correlates the unique set of measurements with the particular touch point, using any of several conventional known techniques and practices including look-up tables, and interpolations from reference data correlating touch locations with a set of measurements.

It will thus be seen that the objects set forth above, among those made apparent from the preceding description, are efficiently attained. Since certain changes may be made in carrying out the above method and in the constructions set forth without departing from the scope of the invention, it is intended that all matter contained in the above description or shown in the accompanying drawings be interpreted as illustrative and not in a limiting sense. It is also to be understood that the following claims are intended to cover all of the generic and specific features of the invention herein described, and all statements of the scope of the invention which, as a matter of language, might be said to fall therebetween.

10.174 EPC

CLAIMS:

1. Apparatus for electrically mapping human touch comprising, in combination,

A. touch-receptive input means having a resistive coating extending substantially continuously thereon along at least a first coordinate axis,

B. means forming a first electrical contact in circuit with said coating at a selected location along said first axis,

C. source means for applying an electrical measuring signal to said contact, and

D. measuring means responsive to the magnitude of the measuring signal current which a capacitive touch to said resistive coating draws for mapping the relative location of that touch along said first axis.

2. Apparatus according to claim 1

A. further comprising means forming at least second and third electrical contacts in circuit with said coating at selected locations relative to said first axis and to a second coordinate axis transverse thereto,

B. in which said source means is arranged for applying measuring signals to said first, second and third contacts, and

C. in which said measuring means is responsive to the magnitudes of measuring signal currents which a capacitive touch to said resistive coating draws for mapping the relative location of that touch along each of said first and second axes.

3. Apparatus according to claim 1

A. further comprising means forming a second electrical contact in circuit with said coating at a selected location spaced from the location of said first contact along said first axis,

B. in which said source means includes means for applying at least first and second electrical measuring signals selectively to said first and second contacts, and

C. in which said measuring means includes means responsive to the magnitude of the measuring signal current which a capacitive touch to said resistive coating draws in response to each of said first and second measuring signals for mapping the location of that touch along at least said first axis relative to said first and second contacts.

4. Apparatus according to claim 1

A. further comprising means forming a second electrical contact in circuit with said coating at a selected location along said first axis and spaced from said first contact,

B. in which said source means includes means for applying electrical measuring signals to each of said first and second contacts, said measuring signals having known relative magnitude parameters, and

C. in which said measuring means includes means responsive to the relative magnitudes of the applied measuring signal currents which a capacitive touch to said resistive coating draws at said contacts.

3

5. Apparatus according to claim 4 in which said measuring means further comprises means for determining a ratio function of said measuring signal current magnitudes.

6. Apparatus according to claim 4 in which said source means further comprises means for applying a selected alternating measuring voltage to said first and second electrodes successively with a first relative phase and with the opposite relative phase.

7. Apparatus according to claim 1
A. in which said source means applies an alternating measuring signal of known magnitude to said contact, and
B. further comprising transformer means in circuit with said source means and producing sampled signals responsive to the relative magnitudes of the measuring signal currents drawn by said resistive coating at said contacts, and
C. in which said measuring means receives and responds to said sampled signals.

8. Apparatus for electrically mapping human touch comprising, in combination,
A. touch-receptive input means having a resistive coating extending substantially continuous thereon along at least a first coordinate axis,
B. means forming first and second electrical contacts in circuit with said coating at different locations along said first axis,
C. source means for applying an electrical measuring signal selectively to each of said contacts, and

4

D. measuring means for determining a ratio function of the measuring signal currents which said resistive coating draws at each of said first and second contacts, thereby to map the location of a touch to said input means.

9. Apparatus according to claim 8

A. in which said source means includes means for applying a measuring voltage of known magnitude parameter across said first and second contacts successively with opposite relative polarities, and

B. in which said measuring means includes means for determining a ratio function of the measuring currents drawn in response to each polarity of said applied measuring voltage.

10. Apparatus for electrically mapping human touch comprising, in combination,

A. touch-receptive input means having a resistive coating extending substantially continuous thereon along at least a first coordinate axis,

B. means forming first and second electrical contacts in circuit with said coating at different locations along said first axis,

C. source means for applying electrical measuring signals selectively to said contacts, and

D. measuring means for determining a ratio function of the impedances of said resistive coating from each of said first and second electrodes to a human touch to said input means and in response to said applied measuring signals, thereby to map the location of the touch.

**FIG. 1**

**FIG. 2**

**FIG. 3**

FIG. 4

FIG. 5

FIG. 6